# EUROPÄISCHE PATENTSCHRIFT

(11) **EP 3 245 175 B1**
(45) Veröffentlichungstag und Bekanntmachung des Hinweises auf die Patenterteilung: **30.01.2019**
(21) Anmeldenummer: 15795154.2
(22) Anmeldetag: 13.11.2015
(51) Int. Cl.: C04B 28/06, C04B 111/00, C04B 111/28

(54) **BRANDSCHUTZPLATTE UND VERFAHREN ZU DEREN HERSTELLUNG**
FIRE PROTECTION PANEL AND METHOD FOR PRODUCING THE SAME
PLAQUE COUPE-FEU ET PROCÉDÉ DE FABRICATION DE LADITE PLAQUE COUPE-FEU

(30) Priorität: 22.12.2014 DE 102014019352
(43) Veröffentlichungstag der Anmeldung: 22.11.2017
(73) Patentinhaber: Fermacell GmbH, 47259 Duisburg (DE)
(72) Erfinder: VOGEL, Dirk, 30627 Hannover (DE); ÇAKTU, Enver, 38120 Braunschweig (DE); KRAPP, Mascha, Janina, 37120 Bovenden (DE); BORNEMANN, Roland, 70565 Stuttgart (DE)
(74) Vertreter: Patent- und Rechtsanwälte Dr. Solf & Zapf
(86) Internationale Anmeldenummer: PCT/EP2015/076615
(87) Internationale Veröffentlichungsnummer: WO 2016/102116

(56) Entgegenhaltungen:
- EP-A1- 1 685 932
- EP-A1- 2 045 227
- EP-A2- 1 184 522
- DE-A1- 2 807 290
- DE-A1-102007 026 970
- DE-A1-102010 044 466
- DE-U1-202005 021 073
- GB-A- 2 289 270
- US-A1- 2002 139 082
- US-A1- 2004 211 338
- US-A1- 2014 216 653
- DATABASE WPI Week 201056 30. Juni 2010 (2010-06-30) Thomson Scientific, London, GB; AN 2010-J98505 XP002753632, SHENGZHEN, LI: "fireproof concrete hollow partition lath", & CN 101 759 419 A (LI S) 30. Juni 2010 (2010-06-30)

## Beschreibung

Die vorliegende Erfindung betrifft eine zementgebundene Brandschutzplatte für den vorbeugenden, baulichen Brandschutz sowie ein Verfahren zu deren Herstellung.

Brandschutzplatten werden beispielsweise im Bereich von Lüftungs- und Entrauchungskanälen sowie im Tunnelbau eingesetzt. Besonders wichtig ist deren Beständigkeit auch bei längerer Hochtemperaturbeanspruchung.

Aus der EP 1 326 811 B1 geht ein Brandschutzmaterial für Konstruktionen aus Beton und Spannbeton hervor, insbesondere für Tunnel, welches in Form von Platten vorliegen kann. Das Brandschutzmaterial wird hergestellt aus einem hydraulisch abbindenden Gemisch enthaltend Tonerdezement, wobei das abgebundene Material weniger als 5 Gew.% Ettringit enthält. Im noch nicht abgebundenen Zustand enthält das Material 50 bis 200 Gew.-Teile Tonerdezement und 10 bis 250 Gew.-Teile Xonotlit, wobei das Xonotlit in Form von verfilzten Kügelchen vorliegt. Das abbindende Gemisch kann zudem als Füllstoffe Wollastonit, Tobermorit und/oder Aluminiumhydroxid enthalten.

Die DE 197 04 961 C2 offenbart eine Verbundbauplatte mit einer Kernschicht, die beidseits mit einer Deckschicht belegt ist, wobei die Kernschicht aus einem als Premix hergestellten Leichtbeton besteht. In die Kernschicht sind als Leichtzuschlagstoff geblähte Tonperlen aus bei über 1000°C gebrannten Tongranalien eingemischt. Zudem ist eine Bewehrung aus alkaliresistenten Glas- oder Synthetikfasern eingebracht.

Die EP 1 685 932 A1 offenbart eine Sandwichplatte mit einer zementgebundenen Kernschicht und zwei zementgebundenen Deckschichten und ein Verfahren zu deren Herstellung. Der Frischbeton zur Herstellung der Kernschicht weist gemäß einer bevorzugten Ausführungsform 18-22 Gew.-% Portlandzement, 18-22 Gew.-% Puzzolan, 12-18 Gew.-% Wasser, 35-45 Gew.-% Blähtongranulat, 0,1-0,3 Gew.-% Luftporenbildner, 0,2-0,5 Gew.-% Fließmittel und 1-2 Gew.% Dispersionsmittel auf. Der Frischmörtel für die Herstellung der beiden Deckschichten weist gemäß einer bevorzugten Ausführungsform 25-32 Gew.-% Portlandzement, 25-32 Gew.-% Puzzolan, 25-32 Gew.-% Wasser, 10-15 Gew.-% Blähglasgranulat, 0,2-0,5 Gew.-% Fließmittel, 0,1-0,3 Gew,-% Stabilisator, 2-3,5 Gew.% Dispersionsmittel und 0,2-0,4 Gew.-% Luftporenbildner auf.

Die US 2002/0139082 A1 offenbart ebenfalls eine Sandwichplatte mit zwei Deckschichten und einer Kernschicht. Die Kernschicht kann gemäß einer Ausführungsform bestehen aus 25-40 Gew.-% Bindemittel, 25-50 Vol.% Poren, 45-65 Gew.-% Füllstoff, 0,5-1 Gew.-% Fasern und 0 bis 6 Gew.-% Additiven und weiteren Stoffen. Unter anderem werden Portlandzement als eines der bevorzugten Bindemittel und Tonerdeschmelzzement aufgezählt. Zudem werden als mögliche Leichtzuschlagstoffe Blähperlit und Blähvermiculit aufgezählt. Um die Feuerbeständigkeit zu erhöhen können gemäß der US 2002/0139082 A1 unter anderem Gips, Glas- oder Wollastonitfasern oder mineralische Zuschläge wie z.B. nicht expandierter Vermiculit verwendet werden. Die untere Deckschicht ist eine Faserzementschicht. Die obere Deckschicht besteht gemäß einer Ausführungsform aus 25-40 Gew.-% hydraulischem Bindemittel, 45-65 Gew.-% Füllstoff, 5-12 Gew.-% Fasern und 0 bis 6 Gew.-% Additiven. Unter anderem wird Portlandzement als eines der bevorzugten Bindemittel erwähnt und Tonerdeschmelzzement genannt. Zudem werden als möglicher Leichtzuschlagstoff keramische Hohlkugeln aufgezählt. Und als Fasern werden vorzugsweise Holzspäne verwendet, genannt werden keramische Fasern.

Die EP 1 184 522 A2 offenbart eine flexible Brandschutzplatte mit einer Kunststoffmatrix und grobkörnigem anorganischem Füllstoff, bei dem es sich unter anderem um Perlit, Vermiculit oder Gasbeton handeln kann. Zudem können Metallfasern enthalten sein. Bei der Brandschutzplatte handelt es sich um eine einschichtige Platte.

Die DE 10 2007 026 970 A1 offenbart eine Zeolith enthaltene Brandschutzplatte, welche neben mineralischen Leichtzuschlägen wie Vermiculit auch Mineralfasern und Tobermorit oder Xonotlit als mineralisches Trägermaterial aufweisen kann. Als Bindemittel wird beispielsweise Phosphorsäure oder auch Zement offenbart.

Die EP 2 045 227 A1 offenbart eine Brandschutzmasse zum Füllen von Hohlkörpern, welche auch als Formkörper ausgebildet sein kann. Die Brandschutzmasse weist einen schnellhärtenden Portlandzement sowie anorganische Füllstoffe, u. a. Calciumsilikate, Perlit und Fasern, z. B. aus Glas, Steinwolle oder Mineralwolle auf.

Die US 2004/0211338 A1 offenbart ein Baumaterial, welches zu Platten verarbeitet werden kann. Das Baumaterial kann Portlandzement und Tonerdeschmelzzement sowie Glasfasern und mineralische Leichtzuschlagkörner aus hochschmelzendem Material, z. B. Perlit enthalten.

Die DE 20 2005 021 073 U1 offenbart ein flächenartiges Brandschutzelement, welches gemäß einer Ausführungsform zwei Deckschichten und eine Kernschicht aufweisen kann. Die Deckschichten werden aus einem mit Zementleim getränktem Fasernetz hergestellt. Bei der Kernschicht handelt es sich um einen Perlitleichtbeton. Als Bindemittel kommen Zemente auf Basis von Tonerdezementen mit Beigaben von Portlandzement in Frage.

Bei bekannten Brandschutzplatten besteht die Gefahr, dass sie bei allseitiger Beanspruchung im Brandfall, wie dies z.B. bei Lüftungs- und Entrauchungskanälen der Fall ist, ihre Funktionalität verlieren. Insbesondere durch Verformung und Schrumpfung oder Aufschmelzerscheinungen gehen die Dämm- und Schutzwirkung verloren.

Aufgabe der vorliegenden Erfindung ist somit die Bereitstellung einer zementgebundenen, leichten, hochtemperaturbeständigen, nichtbrennbaren Brandschutzplatte für den vorbeugenden, baulichen Brandschutz, insbesondere für den Einsatz in Lüftungs- und/oder Entrauchungskanälen und/oder im Tunnelbau, welche kostengünstig und energetisch günstig hergestellt werden kann. Weitere Aufgabe ist die Bereitstellung eines kostengünstigen und energetisch günstigen Verfahrens zur Herstellung einer derartigen Brandschutzplatte.

Diese Aufgaben werden durch eine Brandschutzplatte mit den Merkmalen von Anspruch 1 sowie ein Verfahren mit den Merkmalen von Anspruch 10 gelöst. Vorteilhafte Weiterbildungen der Erfindung sind in den sich jeweils anschließenden Unteransprüchen gekennzeichnet.

Im Folgenden wird die Erfindung anhand einer Zeichnung beispielhaft näher erläutert. Es zeigt:

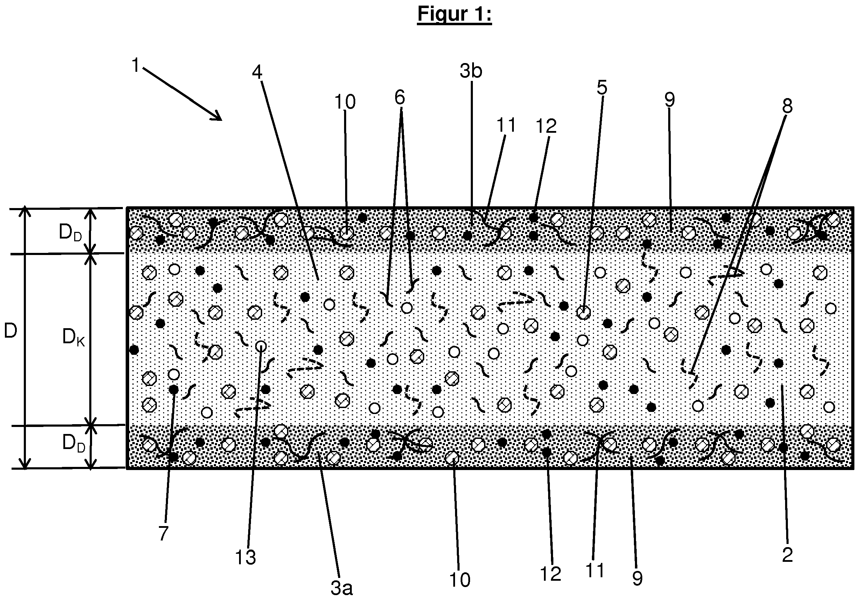

- Figur 1:: Schematisch einen Querschnittsausschnitt einer erfindungsgemäßen Brandschutzplatte

Die erfindungsgemäße, sandwichartige Brandschutzplatte 1 (Fig. 1) besteht aus einer Kernschicht 2, die beidseitig an ihren beiden Hauptoberflächen mit je einer Deckschicht 3a; 3b abgedeckt ist. Die Kernschicht 2 und die beiden Deckschichten 3a; 3b sind dabei fest miteinander verbunden. Vorzugsweise ist die Brandschutzplatte 1 dabei quaderförmig ausgebildet.

Die Kernschicht 2 ist zementgebunden und weist eine Zementsteinmatrix 4 auf, in die mineralische Leichtzuschlagkörner 5 einer leichten, mineralischen Gesteinskörnung, einzelne mineralische Fasern 6 zur Bewehrung sowie erfindungsgemäß CSH-Zuschlagkörner 7 aus dampfgehärtetem bzw. autoklaviertem bzw. hydrothermal gehärtetem, tobermorithaltigem CSH-Material eingebettet sind.

Die Zementsteinmatrix 4 der Kernschicht 2 besteht aus einem abgebundenen, hydraulischen Bindemittel, welches erfindungsgemäß Tonerdezementklinker und gegebenenfalls zudem Portlandzementklinker enthält. Das nicht abgebundene Bindemittel enthält vorzugsweise zudem in an sich bekannter Weise einen Erstarrungsregler, bevorzugt Calciumsulfat oder lithiumhaltige Verbindungen.

Zement ist ein hydraulisch erhärtender Massenbaustoff der Steine- und Erden-Industrie, der hergestellt wird aus in der Natur vorkommenden Rohstoffen. Teilweise werden zudem Nebenprodukte aus anderen Industrien zugegeben. Zement erhärtet auch unter Wasser und der dabei entstehende Zementstein ist auch unter Wasser stabil. Grundsätzlich wird nach DIN EN 197-1 zwischen fünf Hauptzementarten unterschieden, nämlich Portlandzementen (CEM I), Portlandkompositzementen (CEM II), Hochofenzementen (CEM III), Puzzolanzementen (CEM IV), und Kompositzementen (CEM V). Alle genormten Zemente gemäß DIN EN 197-1 enthalten einen Anteil an Portlandzementklinker. Für die Herstellung von Portlandzementklinker werden die Rohstoffe, hauptsächlich Kalkstein und Ton bzw. Mergel, zunächst durch Zerkleinern, Mahlen und dosiertes Mischen aufbereitet und anschließend bei ca. 1450°C gebrannt. Die dabei entstehenden wichtigsten Klinkermineralien sind C₃S (Alit bzw. Tricalciumsilikat), C₂S (Belit bzw. Dicalciumsilikat), C₃A (Tricalciumaluminat) und C₄AF (Brownmillerit bzw. Calciumaluminatferrit). Nach dem Brennen werden die entstandenen Produkte aufgemahlen. Der aufgemahlene Zementklinker wird dann als Bindemittel verwendet.

Wie bereits erläutert, ist Zement ein hydraulisches Bindemittel. Beim Anmachen von Zementklinker mit Wasser beginnen verschiedene chemische Reaktionen des Zements mit dem Wasser, die allgemein als Hydratation bezeichnet werden. Die verschiedenen Klinkermineralien unterscheiden sich dabei bezüglich ihrer Reaktionsprodukte. Aus der Reaktion der Klinkermineralien C₃S und C₂S mit Wasser bei Raumtemperatur entstehen Calciumsilikathydrate und Ca(OH)₂ (Portlandit). C₃A und C₄AF reagieren in Anwesenheit eines Erstarrungsreglers, insbesondere Calciumsulfat, zu AFm, Ettringit sowie Calciumaluminathydraten (CAH) bzw. Calciumferrithydraten (CFH).

Tonerdezemente unterscheiden sich in ihrer Phasenzusammensetzung grundlegend von den silicatreichen Normzementen gemäß DIN EN 197-1. Sie sind genormt in DIN EN 14647. Wesentlicher Bestandteil von Tonerdezement ist das Monocalciumaluminat (CA), daneben in kalkreicheren Tonerdezementen das C₁₂A₇ und in kalkärmeren das CA₂. Der SiO₂-Anteil ist entweder als C₂S oder C₂AS (Gehlenit) gebunden, das Eisenoxid bildet wie im Portlandzementklinker Calciumaluminatferrit (C₄AF). Davon ausgehend hydratisiert Tonerdezement wesentlich schneller als Portlandzement, bindet dabei etwa doppelt so viel Wasser und spaltet praktisch kein Ca(OH)₂ ab. Bei Hydratationstemperaturen unter 25 °C entstehen aus dem CA die zwar festigkeitsbildenden, aber metastabilen Phasen Monocalciumaluminat (CAH₁₀) und/oder Dicalciumaluminathydrat (C₂AH₈). CAH₁₀ und C₂AH₈ wandeln sich je nach Lagerungsbedingungen mehr oder weniger schnell in die stabilen Phasen Hydrogranat (C₃AH₆) und Gibbsit (AH₃) um ("Konversion"). Bei Temperaturen von 40 °C und höher führt die Hydratation unmittelbar zur Bildung der stabilen Phasen C₃AH₆ und AH₃.

Wie bereits erläutert, weist die Kernschicht 2 zudem mineralische Leichtzuschlagkörner 5 auf. Die Leichtzuschlagkörner 5 sind in der Zementsteinmatrix 4 gleichmäßig verteilt und werden in diese eingebettet. Die Leichtzuschlagkörner 5 der Kernschicht 2 bestehen erfindungsgemäß aus hochschmelzendem Material mit einem Schmelzpunkt von ≥ 700°C, bevorzugt ≥ 1100 °C. Die Leichtzuschlagkörner 5 sind Körner einer leichten Gesteinskörnung gemäß DIN 1045-2/DIN EN 13055-1. Somit weisen die Leichtzuschlagkörner 5 eine Kornrohdichte ρₐ < 2,0 kg/dm³, bevorzugt < 1,0 kg/dm³, gemäß DIN EN 1097-6 auf. Die Schüttdichte ρ_{S} der verwendeten Leichtzuschlagkörner 5 beträgt vorzugsweise < 400 kg/m³, bevorzugt < 250 kg/m³ gemäß DIN EN 1097-3. Insbesondere bestehen die Leichtzuschlagkörner 5 aus geblähtem Perlit oder geblähtem Vermiculit oder Blähglas oder Mischungen daraus. Außerdem weisen die Leichtzuschlagkörner 5 vorzugsweise eine Korngröße < 2,5 mm, bevorzugt < 1,6 mm auf.

Bei den mineralischen Fasern 6 der Kernschicht 2 handelt es sich um Glasfasern und/oder Steinwollfasern. Die mineralischen Fasern 6 sind ebenfalls in die Zementsteinmatrix 4 eingebettet und in der Zementsteinmatrix 4 gleichmäßig verteilt. Es handelt sich somit um eine Einzelfaserarmierung. Die mineralischen Fasern 6 dienen zur Bewehrung der Kernschicht 2 insbesondere bei hohen Temperaturen im Brandfall. Hierfür weisen die mineralischen Fasern 6 der Kernschicht 2 vorzugsweise einen Schmelzpunkt > 850°C, bevorzugt > 1000°C auf. Zudem weisen die Glasfasern vorzugsweise eine Faserlänge von < 20 mm, bevorzugt 10 bis 15 mm und einen Faserdurchmesser von 10 bis 20 µm, bevorzugt 14 bis 16 µm auf. Die Steinwollfasern weisen vorzugsweise eine Faserlänge von < 10 mm, bevorzugt 2 bis 5 mm und einen Faserdurchmesser von 3 bis 10 µm, bevorzugt 5 bis 8 µm auf.

Wie bereits erläutert, enthält die Kernschicht 2 zudem erfindungsgemäß CSH-Zuschlagkörner 7 aus tobermorithaltigem, dampfgehärtetem bzw. autoklaviertem bzw. hydrothermal gehärtetem CSH (Calciumsilikathydrat)-Material.

Hydrothermal gehärtetes CSH-Material wird hergestellt aus wässrigen Mischungen aus mindestens einem mineralischen Bindemittel, welches mindestens eine im Hydrothermalprozess reaktionsfähige CaO-Komponente, z.B. Zement oder Branntkalk oder Kalkhydrat, und mindestens eine im Hydrothermalprozess reaktionsfähige SiO₂-Komponente, z.B. Quarzmehl oder Flugasche, enthält, sowie gegebenenfalls, insbesondere inerten, Zusatzstoffen. Außerdem kann die wässrige Mischung zumindest eine Gesteinskörnung (Zuschlagstoff) und/oder übliche Zusatzmittel sowie eine Calciumsulfat-Komponente enthalten. Die wässrige Mischung wird in Gießformen gegossen, ansteifen gelassen, gegebenenfalls geschnitten und anschließend einer Dampfhärtung unterzogen.

Wird der wässrigen Mischung ein Treibmittel, insbesondere Aluminiumpulver- und/oder -paste, zugegeben, handelt es sich um Porenbetonmaterial bzw. um nach der Porenbetontechnologie hergestelltes CSH-Material. Porenbetonmaterial ist hydrothermal gehärtetes, porosiertes Calciumsilikathydratmaterial. Für die Herstellung von hydrothermal gehärtetem Schaumbetonmaterial wird anstelle des Treibmittels vorgefertigter Schaum untergemischt.

Infolgedessen besteht hydrothermal gehärtetes CSH-Material im Wesentlichen aus einem Feststoffsteggerüst aus Calciumsilikathydratphasen (CSH-Phasen), Restquarzkörnern, gegebenenfalls den inerten Zusatzstoffen und/oder der Gesteinskörnung und weiteren Nebenbestandteilen, wie z.B. Anhydrit. Die Restquarzkörner, die inerten Zusatzstoffe und die Gesteinskörnung sind in die CSH-Phasen eingebettet. Bei Poren- und Schaumbetonmaterial weist das Feststoffsteggerüst zudem Stege auf, die die durch die Porosierung oder die Schaumzugabe künstlich erzeugten Poren (=Makroporen) umgeben. Außerdem weist das Feststoffsteggerüst immer Mikroporen auf, die in die CSH-Phasen eingebettet sind bzw. in diesen verteilt sind. Die Mikroporen sind Bestandteil des Feststoffsteggerüsts. Die CSH-Phasen des Feststoffsteggerüsts fungieren somit als Bindephase im Feststoffsteggerüst. Sie sind größtenteils kristallin und halbkristallin, in der Regel handelt es sich um 11 Ä-Tobermorit und um CSH(I).

Bei den erfindungsgemäßen CSH-Zuschlagkörnern 7 handelt es sich dabei vorzugsweise um Körner, die durch Zerkleinern, z.B. Brechen, von hydrothermal gehärtetem CSH-Material, bevorzugt von Porenbetonmaterial, hergestellt werden. Bevorzugt handelt es sich bei dem Ausgangsmaterial dabei um recycliertes Material, also insbesondere um Abfallprodukte aus der Herstellung von CSH-Material, bevorzugt von Porenbetonmaterial. Auch Mehle aus der trockenen Nachbearbeitung, z.B. mittels Sägen oder Schleifen, von hydrothermal gehärtetem CSH-Material können verwendet werden.

Die Korngröße der CSH-Zuschlagkörner 7 ist zudem vorzugsweise < 1 mm, wobei bevorzugt 50 M-% eine Korngröße < 200 µm aufweisen.

Vorzugsweise ist das CSH-Material, insbesondere das Porenbetonmaterial, der CSH-Zuschlagkörner 7 dabei massenhydrophobiert. Vorteil des massenhydrophobierten Materials ist, dass es bei der Herstellung der Kernschicht weniger Anmachwasser aufsaugt. Zudem führt es auch dazu, dass die fertige erfindungsgemäße Brandschutzplatte 1 weniger Wasser aufnimmt, wodurch das Dehn- und Schwindverhalten verbessert wird.

Das CSH-Material, insbesondere das Porenbetonmaterial, der CSH-Zuschlagkörner 7 besteht hauptsächlich aus 11 Ä-Tobermorit und untergeordnet aus CSH(I). Es enthält praktisch keinen Xonotlit, höchstens aus Verunreinigungen < 2 M-%. Calcit kann als Füllstoff in Gehalten bis 25 M-% enthalten sein.

Das CSH-Material, insbesondere das Porenbetonmaterial, der CSH-Zuschlagkörner 7 weist zudem vorzugsweise einen Restquarzgehalt, bestimmt mittels DDK (dynamische Differenzkalorimetrie, englisch differential scanning calorimetry (DSC)) von < 10 M-%, bevorzugt < 5 M-%, besonders bevorzugt < 3 M-% auf.

Die Kernschicht 2 enthält zudem vorzugsweise inerte oder reaktive, mineralische Betonzusatzstoffe gemäß DIN EN 206/DIN 1045-2. Inaktive Zusatzstoffe reagieren nicht mit Zement und Wasser und sind deshalb in der Zementsteinmatrix 4 gleichmäßig verteilt und in diese eingebettet. Reaktive, puzzolanische oder latent hydraulische, Zusatzstoffe reagieren zumindest teilweise bei der Hydratation zu Hydratphasen, welche dann einen Teil der Zementsteinmatrix 4 bilden. Je nach w/z-Wert und Hydratationsgrad kann ein Teil der reaktiven Zusatzstoffe aber auch als unreagierte oder teilweise reagierte Zusatzstoffkörnchen in die Zementsteinmatrix 4 eingebettet sein. Bevorzugt handelt es sich bei den reaktiven Zusatzstoffen um puzzolanische Zusatzstoffe, insbesondere Flugasche nach DIN EN 450-1. Im Rahmen der Erfindung werden reaktive Zusatzstoffe bevorzugt.

Insbesondere, wenn es sich bei der Brandschutzplatte 1 um eine Brandschutzplatte 1 für Lüftungs- und Entrauchungskanäle handelt, weist die Kernschicht 2 zudem organische Naturfasern 8 auf. Die einzelnen Naturfasern 8 sind ebenfalls in der Kernschicht 2 gleichmäßig verteilt und in die Zementmatrix 4 eingebettet. Die Naturfasern 8 dienen zur Armierung der Brandschutzplatte 1 im kalten Zustand, also dann, wenn die Brandschutzplatte 1 nicht unter Brandbeanspruchung steht. Die Naturfasern sorgen für eine gute Duktilität der Brandschutzplatte 1 im kalten Zustand, vorwiegend während der Montage. Dadurch kann die Brandschutzplatte 1 beispielsweise problemlos mittels Schrauben am jeweiligen Untergrund befestigt werden. Vorzugsweise handelt es sich bei den Naturfasern um Zellulosefasern, z.B. Papierfasern.

Die Kernschicht 2 bzw. die Mörtelmischung zur Herstellung der Kernschicht 2 enthält vorzugsweise zudem übliche Betonzusatzmittel, insbesondere gemäß DIN EN 934-2. Betonzusatzmittel sind flüssige, pulverförmige oder granulatförmige Stoffe, die durch chemische/und oder physikalische Wirkung die Eigenschaften des Frisch- und/oder Festmörtels beeinflussen. Vorzugsweise weist die Kernschicht 2 bzw. die Mörtelmischung zur Herstellung der Kernschicht 2 Fließmittel und/oder Wasserretentionsmittel, z.B. Methylzellulose und /oder Luftporenbildner auf. Aufgrund der Wirkung des Luftporenbildners weist die Kernschicht 2 kugelförmige, durch den Luftporenbildner gebildete, kugelförmige Luftporen 13 auf, welche ebenfalls in der Zementsteinmatrix 4 verteilt sind und in diese eingebettet sind.

Die beiden Deckschichten 3a; 3b, welche bevorzugt identisch ausgebildet sind, sind ebenfalls zementgebunden und weisen jeweils eine Zementsteinmatrix 9 auf, in die ebenfalls mineralische Leichtzuschlagkörner 10 einer leichten, mineralischen Gesteinskörnung, mineralische Fasern 11 zur Bewehrung bzw. Armierung sowie erfindungsgemäß CSH-Zuschlagkörner 12 aus dampfgehärtetem bzw. autoklaviertem bzw. hydrothermal gehärtetem, tobermorithaltigem CSH-Material eingebettet sind.

Erfindungsgemäß besteht die Zementsteinmatrix 9 der Deckschichten 3a; 3b ebenfalls aus einem abgebundenen, hydraulischen Bindemittel, welches im nicht abgebundenen Zustand Tonerdezementklinker und bevorzugt zudem Portlandzementklinker enthält. Das nicht abgebundene Bindemittel enthält vorzugsweise zudem in an sich bekannter Weise einen Erstarrungsregler, bevorzugt Calciumsulfat und/oder lithiumhaltige Verbindungen.

Die Leichtzuschlagkörner 10 der Deckschichten 3a; 3b sind in der Zementsteinmatrix 9 ebenfalls gleichmäßig verteilt und werden in diese eingebettet. Die Leichtzuschlagkörner 10 der Deckschichten 3a; 3b bestehen erfindungsgemäß ebenfalls aus hochschmelzendem, mineralischem Material mit einem Schmelzpunkt von ≥ 700°C, bevorzugt ≥ 1100 °C. Die Leichtzuschlagkörner 10 sind wiederum Körner einer leichten Gesteinskörnung gemäß DIN 1045-2/DIN EN 13055-1. Somit weisen die Leichtzuschlagkörner 10 eine Kornrohdichte < 2,0 kg/dm³, bevorzugt < 1,0 kg/dm³ gemäß DIN EN 1097-6 auf. Die Schüttdichte ρ_{S} der verwendeten Leichtzuschlagkörner 10 beträgt wiederum vorzugsweise < 400 kg/m³, bevorzugt < 250 kg/m³ gemäß DIN EN 1097-3. Insbesondere bestehen die Leichtzuschlagkörner 10 der Deckschichten 3a; 3b aus geblähtem Perlit oder geblähtem Vermiculit oder Blähglas oder Mischungen daraus. Außerdem weisen die Leichtzuschlagkörner 5 vorzugsweise eine Korngröße < 2,5 mm, bevorzugt < 1,6 mm auf.

Bei den mineralischen Fasern 11 der beiden Deckschichten 3a; 3b handelt es sich ebenfalls um Glasfasern und/oder Steinwollfasern. Die mineralischen Fasern 11 sind ebenfalls in der Zementsteinmatrix 9 gleichmäßig verteilt und sind in die Zementsteinmatrix 9 eingebettet. Die mineralischen Fasern 11 dienen zur Bewehrung der Deckschichten 3a; 3b insbesondere bei hohen Temperaturen im Brandfall. Infolgedessen weisen auch die mineralischen Fasern 11 der Deckschichten 3a; 3b vorzugsweise einen Schmelzpunkt > 850°C, bevorzugt > 1000°C auf. Zudem weisen die Fasern 11 der Deckschichten 3a; 3b eine größere Länge und einen größeren Durchmesser als die Fasern 6 der Kernschicht 2 auf. Unter anderem dadurch weisen die beiden Deckschichten 3a; 3b höhere Festigkeiten auf als die Kernschicht 2. Vorzugsweise weisen die Fasern 11 der Deckschichten 3a; 3b, bei denen es sich insbesondere um Glasfasern handelt, eine Faserlänge von 20 bis 40 mm, bevorzugt 25 bis 35 mm auf. Zudem weisen sie vorzugsweise einen Faserdurchmesser von 0,7 bis 2 mm, bevorzugt 1 bis 1,5 mm auf. Aufgrund der größeren Länge und Dicke können sich die einzelnen Fasern 11 der Deckschichten 3a; 3b auch teilweise miteinander verknäulen bzw. Faserbüschel bilden, wodurch die Festigkeitseigenschaften der Deckschichten 3a; 3b verbessert werden.

Wie bereits erläutert, enthalten auch die beiden Deckschichten 3a; 3b erfindungsgemäß CSH-Zuschlagkörner 12 aus hydrothermal gehärtetem CSH-Material, bevorzugt aus Porenbetonmaterial. Bei den CSH-Zuschlagkörnern 12 der Deckschichten 3a; 3b handelt es sich ebenfalls um Körner, die durch Zerkleinern, insbesondere Brechen, Sägen oder Schleifen, von hydrothermal gehärtetem CSH-Material, bevorzugt aus Porenbetonmaterial, hergestellt werden. Bevorzugt handelt es sich bei dem Ausgangsmaterial dabei wiederum um recycliertes Material, also insbesondere um Abfallprodukte aus der Herstellung von CSH-Material, bevorzugt von Porenbetonmaterial.

Vorzugsweise ist auch das CSH-Material, insbesondere das Porenbetonmaterial, der CSH-Zuschlagkörner 12 der beiden Deckschichten 3a; 3b dabei massenhydrophobiert.

Das CSH-Material der CSH-Zuschlagkörner 12 der beiden Deckschichten 3a; 3b weist vorzugsweise die gleichen Eigenschaften bezüglich Korngröße, Tobermoritgehalt, Calcitgehalt, Quarzgehalt sowie Xonotlitgehalt wie das CSH-Material der CSH-Zuschlagkörner 7 der Kernschicht 2 auf.

Auch die Deckschichten 3a; 3b können zudem weitere Bestandteile enthalten, z.B. inerte oder bevorzugt reaktive Betonzusatzstoffe gemäß DIN EN 206/DIN 1045-2. Bevorzugt handelt es sich bei den reaktiven Zusatzstoffen der beiden Deckschichten 3a; 3b um puzzolanische Zusatzstoffe, insbesondere Flugasche nach DIN EN 450-1.

Die beiden Deckschichten 3a; 3b bzw. die Mörtelmischungen zur Herstellung der beiden Deckschichten 3a; 3b enthalten vorzugsweise zudem übliche Betonzusatzmittel gemäß DIN EN 934-2. Vorzugsweise weisen beiden die beiden Deckschichten 3a; 3b bzw. die Mörtelmischungen zur Herstellung der beiden Deckschichten 3a; 3b Fließmittel und/oder Wasserretentionsmittel, z.B. Methylzellulose auf. Die Deckschichten 3a; 3b weisen vorzugsweise keinen Luftporenbildner auf.

Die Gesamtdicke D der erfindungsgemäßen Brandschutzplatte 1 beträgt vorzugsweise 10 bis 60 mm, besonders bevorzugt 20 bis 40 mm. Die Kernschicht 2 weist dabei vorzugsweise eine Dicke D_{K} von 8 bis 55 mm, besonders bevorzugt 30 mm auf. Und die beiden Deckschichten 3a; 3b weisen vorzugsweise eine Dicke D_{D} von 0,5 bis 3 mm, besonders bevorzugt 2 mm auf. Die Deckschichten 3a; 3b sind also dünner als die Kernschicht 2.

Im Folgenden wird nun die Herstellung der erfindungsgemäßen Brandschutzplatte 1 näher erläutert:
Die Herstellung der erfindungsgemäßen Brandschutzplatte 1 erfolgt "frisch auf frisch". Das heißt, es werden ein Kernschichtfrischmörtel für die Kernschicht 2 sowie ein Deckschichtfrischmörtel für die beiden Deckschichten 3a; 3b hergestellt und die einzelnen Frischmörtel zur Erzeugung der einzelnen Schichten 2; 3a; 3b aufeinander gebracht. Anschließend wird die Platte abbinden bzw. erhärten gelassen. Dies erfolgt nicht hydrothermal, sondern unter Umgebungsdruck bei Raumtemperatur oder leicht erhöhter Temperatur bis ca. 80°C, vorzugsweise bei 65°C. Insbesondere erfolgt die Herstellung, im Wesentlichen wie in der EP 1 685 932 A1 beschrieben wie folgt:
Auf einer sich in eine Hauptförderrichtung bewegenden Hauptförderbahn liegen nach oben und stirnseitig offene, im Querschnitt U-förmige, Metallformen auf. Die Metallformen liegen stirnseitig aneinander. Oberhalb der Hauptförderbahn ist eine erste Deckschichterzeugungseinrichtung zur Erzeugung der ersten Deckschicht 3a angeordnet. Die erste Deckschichterzeugungseinrichtung weist einen Behälter auf, in dem der Deckschichtfrischmörtel für die erste Deckschicht 3a enthalten ist. Zudem weist die erste Deckschichterzeugungseinrichtung Mittel zum Einbringen des Deckschichtfrischmörtels für die erste Deckschicht 3a in die Metallformen auf. Vorzugsweise handelt es sich dabei um eine Spritzeinrichtung mit oszillierendem Spritzkopf.

Der Deckschichtfrischmörtel für die erste Deckschicht 3a wird dabei hergestellt durch Herstellung einer Deckschichttrockenmörtelmischung in einem Trockenmischer und Mischen der Deckschichttrockenmörtelmischung mit Wasser in einem Fertigmischer. Vorzugsweise weist der Deckschichtfrischmörtel für die erste Deckschicht 3a einen w/f-Wert (Wasser/Feststoffwert) von 0,5 bis 0,9, bevorzugt 0,8 auf. Die Frischmörtelrohdichte gemäß DIN EN 1015-6 beträgt vorzugsweise 1,0 bis 1,2 g/cm³. Das Ausbreitmaß gemäß DIN EN 1015-3 beträgt vorzugsweise 19 bis 23 cm. Der Luftporengehlt gemäß DIN EN1015-7 beträgt vorzugsweise 5-15 Vol.-%.

Der Deckschichtfrischmörtel der ersten Deckschicht 3a weist dabei als trockene Bestandteile zumindest Tonerdezementklinker, vorzugsweise Portlandzementklinker, die Leichtzuschlagkörner 10, die mineralischen Fasern 11, erfindungsgemäß die CSH-Zuschlagkörner 12, und gegebenenfalls zumindest einen inerten und/oder reaktiven Betonzusatzstoff, sowie vorzugsweise zumindest ein Betonzusatzmittel auf.

Vorzugsweise weist der Deckschichtfrischmörtel der ersten Deckschicht 3a bezogen auf die Gesamttrockenmasse folgende trockene Bestandteile auf (die Werte addieren sich zu 100 Gew.%):

| | **Gew.%** |
|---|---|
| **Tonerdezementklinker** | 40 bis 70 |
| **Portlandzementklinker** | 0 bis 20 |
| **Leichtzuschlagkörner** | 5 bis 20 |
| **CSH-Zuschlagkörner** | 5 bis 20 |
| **Mineralische Fasern** | 1 bis 5 |
| **Organische Naturfasern** | 0 bis 3 |
| **Inerte und/oder reaktive Betonzusatzstoff(e)** | 0 bis 20 |
| **Betonzusatzmittel** | < 2 |
| **weitere Bestandteile, u.a., Erstarrungsregler** | < 5 |

Soll die Brandschutzplatte 1 für Lüftungs- und Entrauchungskanäle verwendet werden weist der Deckschichtfrischmörtel der ersten Deckschicht 3a bezogen auf die Gesamttrockenmasse vorzugsweise folgende trockenen Bestandteile auf (die Werte addieren sich zu 100 Gew.%):

| | **Gew.%** |
|---|---|
| | |
| **Tonerdezementklinker** | 55 bis 65 |
| **Portlandzementklinker** | 12 bis 18 |
| **Blähglas** | 12 bis 18 |
| **CSH-Zuschlagkörner** | 6 bis 10 |
| **Glasfasern** | 1,5 bis 3 |
| **Organische Naturfasern** | 0,5 bis 2 |
| **Puzzolanische Zusatzstoffe** | 0 bis 10 |
| **Betonzusatzmittel** | < 2 |
| **weitere Bestandteile, u.a. Erstarrungsregler** | < 5 |

Soll die Brandschutzplatte 1 für den Tunnelbau verwendet werden weist der Deckschichtfrischmörtel der ersten Deckschicht 3a bezogen auf die Gesamttrockenmasse vorzugsweise folgende trockenen Bestandteile auf (die Werte addieren sich zu 100 Gew.%):

| | **Gew.%** |
|---|---|
| **Tonerdezementklinker** | 60 bis 70 |
| **Portlandzementklinker** | 12 bis 18 |
| **Geblähter Perlit** | 3 bis 7 |
| **CSH-Zuschlagkörner** | 10 bis 15 |
| **Glasfasern** | 1,5 bis 3 |
| **Puzzolanische Zusatzstoffe** | 0 bis 10 |
| **Betonzusatzmittel** | < 2 |
| **weitere Bestandteile, u.a. Erstarrungsregler** | < 5 |

Auf die frische erste Deckschicht 3a wird nun der Kernschichtfrischmörtel zur Erzeugung der Kernschicht 2 aufgebracht. Dazu ist oberhalb der Hauptförderbahn eine Kernschichterzeugungseinrichtung angeordnet. Diese ist in Hauptförderrichtung der ersten Deckschichterzeugungseinrichtung nachgeordnet. Die Kernschichterzeugungseinrichtung weist einen Behälter auf, in dem der Kernschichtfrischmörtel enthalten ist. Zudem weist die Kernschichterzeugungseinrichtung Mittel zum Einbringen des Kernschichtfrischmörtels auf die frische erste Deckschicht 3a auf. Vorzugsweise handelt es sich dabei um eine Zellradschleuse.

Der Kernschichtfrischmörtel wird dabei hergestellt durch Mischen einer Kernschichttrockenmörtelmischung in mit Wasser in einem Kernschichtmischer. Vorzugsweise weist der Kernschichtfrischmörtel einen w/f-Wert von 0,6 bis 1, bevorzugt 0,8 auf. Die Frischmörtelrohdichte des Kernschichtfrischmörtels gemäß DIN EN 1015-6 ist geringer als die Frischmörtelrohdichte des Deckschichtfrischmörtels. Sie beträgt vorzugsweise 0,8 bis 1,1 g/cm³. Das Ausbreitmaß des Kernschichtfrischmörtels gemäß DIN EN 1015-3 ist ebenfalls geringer als das Ausbreitmaß des Deckschichtfrischmörtels. Es beträgt vorzugsweise 14 bis 17 cm. Der Luftporengehalt des Kernschichtfrischmörtels gemäß DIN EN 1015-7 ist höher als der Luftporengehalt des Deckschichtfrischmörtels. Er beträgt vorzugsweise 15-30 Vol.-%.

Der Kernschichtfrischmörtel weist dabei als trockene Bestandteile zumindest Tonerdezementklinker, die mineralischen Leichtzuschlagkörner 5, die mineralischen Fasern 6, erfindungsgemäß die CSH-Zuschlagkörner 7, gegebenenfalls die Naturfasern 8 und vorzugsweise zumindest einen inerten und/oder reaktiven Betonzusatzstoff, sowie vorzugsweise zumindest ein Betonzusatzmittel auf.

Vorzugsweise weist der Kernschichtfrischmörtel bezogen auf die Gesamttrockenmasse folgende trockene Bestandteile auf (die Werte addieren sich zu 100 Gew.%):

| | **Gew.%** |
|---|---|
| **Tonerdezementklinker** | 30 bis 65 |
| **Portlandzementklinker** | 0 bis 20 |
| **Leichtzuschlagkörner** | 15 bis 40 |
| **CSH-Zuschlagkörner** | 5 bis 20 |
| **Mineralische Fasern** | 1 bis 5 |
| **Organische Naturfasern** | 0 bis 3 |
| **Inerte und/oder reaktive Betonzusatzstoff(e** | 0 bis 20 |
| **Betonzusatzmittel** | < 3 |
| **weitere Bestandteile, u.a. Erstarrungsregler** | < 5 |

Soll die Brandschutzplatte 1 für Lüftungs- und Entrauchungskanäle verwendet werden weist der Kernschichtfrischmörtel bezogen auf die Gesamttrockenmasse vorzugsweise folgende trockenen Bestandteile auf (die Werte addieren sich zu 100 Gew.%):

| | **Gew.%** |
|---|---|
| **Tonerdezementklinker** | 40 bis 50 |
| **Portlandzementklinker** | 6 bis 15 |
| **Blähglas** | 20 bis 30 |
| **Geblähter Vermiculit** | 5 bis 10 |
| **CSH-Zuschlagkörner** | 5 bis 8 |
| **Glasfasern** | 0,8 bis 1,5 |
| **Steinwollefasern** | 1,5 bis 2,0 |
| **Organische Naturfasern** | 0,5 bis 2,0 |
| **puzzolanischen Zusatzstoff** | 5 bis 15 |
| **Betonzusatzmittel** | < 3 |
| **weitere Bestandteile, u.a. Erstarrungsregler** | < 5 |

Soll die Brandschutzplatte 1 für den Tunnelbau verwendet werden weist der Kernschichtfrischmörtel bezogen auf die Gesamttrockenmasse vorzugsweise folgende trockenen Bestandteile auf (die Werte addieren sich zu 100 Gew.%):

| | **Gew.%** |
|---|---|
| **Tonerdezementklinker** | 55 bis 65 |
| **Portlandzementklinker** | 0 bis 5 |
| **Geblähter Perlit** | 8 bis 15 |
| **CSH-Zuschlagkörner** | 10 bis 20 |
| **Glasfasern** | 1,5 bis 3 |
| **puzzolanischen Zusatzstoff** | 8 bis 15 |
| **Betonzusatzmittel** | < 3 |
| **weitere Bestandteile, u.a. Erstarrungsregler** | < 5 |

Auf die frische Kernschicht 2 wird nun der Deckschichtfrischmörtel für die zweite Deckschicht 3b aufgebracht. Der Deckschichtfrischmörtel der zweiten Deckschicht 3b hat vorzugsweise eine Zusammensetzung wie der Deckschichtfrischmörtel der ersten Deckschicht 3a.

Zur Erzeugung der zweiten Deckschicht 3b ist oberhalb der Hauptförderbahn eine zweite Deckschichterzeugungseinrichtung angeordnet. Diese ist in Hauptförderrichtung der Kernschichterzeugungseinrichtung nachgeordnet. Die zweite Deckschichterzeugungseinrichtung weist einen Behälter auf, in dem der Deckschichtfrischmörtel für die zweite Deckschicht 3b enthalten ist. Zudem weist die zweite Deckschichterzeugungseinrichtung eine Kunststofffolienbahn auf, welche sich in eine zur Hauptförderrichtung entgegengesetzte Nebenförderrichtung bewegt. Auf die Kunststofffolienbahn wird mit geeigneten Mitteln der Deckschichtfrischmörtel für die zweite Deckschicht 3b aufgebracht. Anschließend wird die Kunststofffolienbahn mit der frischen zweiten Deckschicht 3b um 180° umgelenkt, so dass die frische zweite Deckschicht 3b auf die frische Kernschicht 2, gegenüberliegend zur ersten frischen Deckschicht 3a, aufgebracht wird und die Kunststofffolienbahn zuoberst angeordnet ist. Es entsteht ein endloser, nicht abgebundener Plattenstrang.

Nun wird der erzeugte, endlose Plattenstrang in einer Schneideinrichtung in einzelne, nicht abgebundene Platten aufgeteilt und die einzelnen Formen mit den Platten in einer Abbindeeinrichtung hydraulisch abbinden gelassen. Dies erfolgt vorzugsweise bei Umgebungsdruck und Raumtemperatur oder leicht erhöhter Temperatur bis zu 80°C, bevorzugt bei bis zu 65°C. Der Abbindevorgang dauert ca. 14 bis 24 h. Dann wird die Kunststofffolie abgezogen und die einzelnen Platten werden für 10 bis 16 h bei 40 bis 65 °C bis zur Ausgleichsfeuchte getrocknet.

Die erfindungsgemäße Brandschutzplatte 1 ist hochtemperaturbeständig. Auch bei allseitiger Brandbeanspruchung wird ihre Funktion nicht durch Schrumpfung, Verformung oder Aufschmelzerscheinungen beeinträchtigt.

Dies resultiert aus der gezielten Auswahl und Zusammenstellung der einzelnen mineralischen Bestandteile der erfindungsgemäßen Brandschutzplatte 1, welche alle hochtemperaturbeständig sind. Der Anteil an Tonerdezement in dem noch nicht abgebundenen Bindemittel der Kernschicht 2 und der beiden Deckschichten 3a; 3b sorgt dafür, dass eine Zementsteinmatrix 4; 9 gebildet wird, welche auch im Hochtemperaturbereich stabil ist. Denn die gebildeten CAH-Phasen sind stabiler als die CSH-Phasen des Portlandzementsteins. Im Rahmen der Erfindung wurde nun heraus gefunden, dass die tobermorithaltigen CSH-Zuschlagkörner 7; 12 eine hervorragende Kühlwirkung im Brandfall aufweisen. Denn Tobermorit enthält sehr viel Kristallwasser (ca. 12-20 Gew.%), insbesondere deutlich mehr als Xonotlit (ca. 2,5 Gew.%), welches beim Brand verdampft und ausgetrieben wird. Dabei wird Energie aufgenommen. Zudem wird auch für die Zersetzung des Tobermorits in letztendlich Wollastonit viel Wärmeenergie benötigt, was ebenfalls zur hohen Beständigkeit der erfindungsgemäßen Brandschutzplatte 1 beiträgt.

Gleichzeitig weist die erfindungsgemäße Brandschutzplatte 1, insbesondere aufgrund der mineralischen Leichtzuschlagkörner 5;10 und der durch den Luftporenbildner gebildeten Luftporen 13 in der Kernschicht 2 ein sehr geringes Gewicht und gute Dämmeigenschaften bei gleichzeitig geringer Plattendicke auf. Dadurch kann die Bekleidungsdicke verringert werden und die Art und Anzahl der Befestigungsmittel optimiert bzw. minimiert werden.

Die erfindungsgemäße Brandschutzplatte 1 weist insbesondere eine Trockenrohdichte ρ₀ gemäß DIN EN ISO 12570 von 500 bis 800 kg/m³, bevorzugt 600 bis 750 kg/m³ auf.

Trotzdem weist die erfindungsgemäße Brandschutzplatte 1 sehr gute Festigkeitseigenschaften auf. Die Kombination der guten Festigkeitseigenschaften bei gleichzeitig geringem Gewicht und hervorragenden Brandschutzeigenschaften wird insbesondere durch die Kombination der beiden dünnen Deckschichten 3a; 3b mit der dickeren Kernschicht 2 gewährleistet. Denn die Deckschichten 3a; 3b weisen längere mineralische Fasern 11, einen höheren Zementsteingehalt und eine höhere Trockenrohdichte sowie einen geringeren Luftporengehalt als die Kernschicht 2 auf. Dadurch sorgen sie für eine ausreichende Festigkeit der erfindungsgemäßen Brandschutzplatte 1. Die Kernschicht 2 dagegen sorgt für ein geringes Gewicht und die guten Brandschutzeigenschaften.

Die Deckschichten 3a; 3b weisen vorzugsweise eine Trockenrohdichte ρ₀ gemäß DIN EN ISO 12570 von 900 bis 1000 kg/m³ auf. Die Kernschicht 2 dagegen weist vorzugsweise eine Trockenrohdichte ρ₀ gemäß DIN EN ISO 12570 von 400 bis 700 kg/m³ auf. Die Trockenrohdichte ρ₀ der einzelnen Schichten kann z.B. durch Zersägen der Brandschutzplatte 1 und ermittelt werden.

Zudem ist die erfindungsgemäße Brandschutzplatte 1 witterungsbeständig und weist eine hohe Dauerhaftigkeit auf.

Insbesondere weist die erfindungsgemäße Brandschutzplatte 1 eine Frost-Tauwechselbeständigkeit gemäß DIN EN 12467 der höchsten Kategorie A auf. Auch weist die erfindungsgemäße Brandschutzplatte 1 aufgrund der mineralischen Fasern 6;11 eine gute Festigkeit auch im Brandfall auf. Die Fasern 6;11 dienen im Hochtemperaturbereich zur Rissüberbrückung und Aufnahme von Verformungskräften. Das Brandverhalten der erfindungsgemäßen Brandschutzplatte 1 ist gemäß DIN EN 13501 in die Kategorie A1 eingestuft. Zudem erfüllt die erfindungsgemäße Brandschutzplatte 1 für den Tunnelbau die bekannten international gebräuchlichen Tunnel-Temperatur-Zeit-Kurven, wie HCM (Hydro Carbon Mayor-Curve) 120 min oder RWS (Rijkswaterstaat Curve) 180 min und die Prüfungen gemäß DIN EN 1366.

Die erfindungsgemäße Brandschutzplatte 1 ist zudem einfach und kostengünstig sowie energetisch günstig herstellbar, insbesondere, wenn recycliertes CSH-Material verwendet wird.

Aufgrund des Gehaltes an Portlandzementklinker in dem Deckschichtfrischmörtel wird die Wärmeentwicklung beim Abbinden reduziert. Denn diese ist bei Tonerdezement deutlich größer als bei dem langsamer abbindenden Portlandzement. Somit kann über die Verwendung von Portlandzement auch das Abbinden der Deckschichten 3a; 3b mit dem Abbinden der Kernschicht 2 synchronisiert werden. Auch durch den Gehalt an CSH-Zuschlagkörnern 7;12 kann zudem die Wärmeentwicklung reguliert werden, weil dadurch der Gehalt an Zement anteilsmäßig reduziert/erhöht werden kann.

Im Rahmen der Erfindung liegt es dabei auch, dass die Kernschicht 2 anstelle der einzelnen mineralischen Fasern 6 oder zusätzlich dazu eine oder mehrere Fasermatten, insbesondere Gewebe, aus mineralischen Fasern zur Bewehrung aufweist.

Bei den angegebenen DIN-Normen handelt es sich jeweils um die zum Zeitpunkt des Prioritätstages geltenden DIN-Normen.

## Patentansprüche

1. Brandschutzplatte (1) für den vorbeugenden, baulichen Brandschutz, insbesondere für den Einbau in Tunnel oder in Lüftungs- und/oder Entrauchungskanäle, aufweisend eine zementgebundene Kernschicht (2) sowie zwei die Kernschicht (2) abdeckende, zementgebundene Deckschichten (3a; b),
wobei die Kernschicht (2) folgende Merkmale aufweist:
a) die Kernschicht (2) weist eine Zementsteinmatrix (4) aus einem abgebundenen, hydraulischen, Tonerdezementklinker enthaltenden Bindemittel, auf,
b) in die Zementsteinmatrix (4) sind mineralische Leichtzuschlagkörner (5) aus hochschmelzendem Material mit einem Schmelzpunkt von ≥ 700°C, bevorzugt ≥ 1100 °C, mineralische Fasern (6) sowie CSH-Zuschlagkörner (7) aus hydrothermal gehärtetem, tobermorithaltigem CSH-Material eingebettet,
und wobei die beiden Deckschichten (3a; 3b) jeweils folgende Merkmale aufweisen:
c) die beiden Deckschichten (3a; b) weisen jeweils eine Zementsteinmatrix (9) aus einem abgebundenen, hydraulischen, Tonerdezementklinker und vorzugsweise Portlandzementklinker enthaltenden Bindemittel auf,
d) in die Zementsteinmatrix (9) sind mineralische Leichtzuschlagkörner (10) aus hochschmelzendem Material mit einem Schmelzpunkt von ≥ 700°C, bevorzugt ≥ 1100 °C, mineralische Fasern (11) sowie CSH-Zuschlagkörner (12) aus hydrothermal gehärtetem, tobermorithaltigem CSH-Material eingebettet,
e) die beiden Deckschichten (3a; 3b) weisen eine höhere Trockenrohdichte ρ₀ gemäß DIN EN ISO 12570 als die Kernschicht (2) auf.

2. Brandschutzplatte (1) nach Anspruch 1,
**dadurch gekennzeichnet, dass**
die CSH-Zuschlagkörner (7;12) der Kernschicht (2) und/oder der beiden Deckschichten (3a; 3b) massenhydrophobiert sind.

3. Brandschutzplatte (1) nach Anspruch 1 oder 2,
**dadurch gekennzeichnet, dass**
die CSH-Zuschlagkörner (7;12) der Kernschicht (2) und/oder der beiden Deckschichten (3a; 3b) aus recycliertem CSH-Material, bevorzugt Porenbetonmaterial, bestehen.

4. Brandschutzplatte (1) nach einem der vorhergehenden Ansprüche,
**dadurch gekennzeichnet, dass**
die CSH-Zuschlagkörner (7;12) der Kernschicht (2) und/oder der beiden Deckschichten (3a; 3b) aus gebrochenem CSH-Material, insbesondere gebrochenem Porenbetonmaterial, und/oder Sägemehl und/oder Schleifmehl aus der trockenen Nachbearbeitung von CSH-Material, insbesondere von Porenbetonmaterial, bestehen.

5. Brandschutzplatte (1) nach einem der vorhergehenden Ansprüche,
**dadurch gekennzeichnet, dass**
die Leichtzuschlagkörner (5;10) der Kernschicht (2) und/oder der beiden Deckschichten (3a; 3b) eine Kornrohdichte < 2,0 kg/dm³, bevorzugt < 1,0 kg/dm³ gemäß DIN EN 1097-6 aufweisen.

6. Brandschutzplatte (1) nach einem der vorhergehenden Ansprüche,
**dadurch gekennzeichnet, dass**
die Leichtzuschlagkörner (5;10) der Kernschicht (2) und/oder der beiden Deckschichten (3a; 3b) aus geblähtem Perlit oder geblähtem Vermiculit oder Blähglas oder Mischungen daraus bestehen.

7. Brandschutzplatte (1) nach einem der vorhergehenden Ansprüche,
**dadurch gekennzeichnet, dass**
die Kernschicht (2) einzelne organische Naturfasern (8), insbesondere Zellulosefasern aufweist, welche in die Zementsteinmatrix (4) eingebettet sind.

8. Brandschutzplatte (1) nach einem der vorhergehenden Ansprüche,
**dadurch gekennzeichnet, dass**
es sich bei den mineralischen Fasern (6; 11) der Kernschicht (2) und/oder der Deckschichten (3a; 3b) um Glasfasern und/oder Steinwollfasern handelt.

9. Brandschutzplatte (1) nach einem der vorhergehenden Ansprüche,
**dadurch gekennzeichnet, dass**
das hydraulische Bindemittel der Kernschicht (2) und/oder der Deckschichten (3a; 3b) zumindest einen, bevorzugt reaktiven, Zusatzstoff, insbesondere Flugasche, enthält und/oder die Brandschutzplatte (1) eine Trockenrohdichte ρ₀ gemäß DIN EN 12570 von 500 bis 800 kg/m³, bevorzugt 600 bis 750 kg/m³ aufweist und/oder die Deckschichten (3a; 3b) einen höheren Anteil (Gew. %) an Zementstein als die Kernschicht (2) aufweisen.

10. Verfahren zur Herstellung einer Brandschutzplatte (1) nach einem der vorhergehenden Ansprüche, mit folgenden Verfahrensschritten:
a) Herstellen eines Kernschichtfrischmörtels zur Herstellung der Kernschicht (2) und Erzeugung einer frischen Kernschicht daraus,
b) Herstellen eines Deckschichtfrischmörtels zur Herstellung der beiden Deckschichten (3a; 3b) und Erzeugung zweier frischer Deckschichten daraus,
c) Zusammenfügen der beiden frischen Deckschichten und der frischen Kernschicht,
d) Abbinden lassen der Kernschicht und der beiden Deckschichten.

11. Verfahren nach Anspruch 10,
**dadurch gekennzeichnet, dass**
der Deckschichtfrischmörtel zur Herstellung der beiden Deckschichten (3a; 3b) bezogen auf die Gesamttrockenmasse folgende trockene Bestandteile aufweist (die Werte addieren sich zu 100 Gew.%):
| | **Gew.%** |
|---|---|
| **Tonerdezementklinker** | 40 bis 70 |
| **Portlandzementklinker** | 0 bis 20 |
| **Leichtzuschlagkörner** | 5 bis 20 |
| **CSH-Zuschlagkörner** | 5 bis 20 |
| **Mineralische Fasern** | 1 bis 5 |
| **Organische Naturfasern** | 0 bis 3 |
| **Inerte und/oder reaktive Betonzusatzstoff(e)** | 0 bis 20 |
| **Betonzusatzmittel** | < 2 |
| **weitere Bestandteile, u.a., Erstarrungsregler** | < 5 |
und der Kernschichtfrischmörtel bezogen auf die Gesamttrockenmasse folgende trockene Bestandteile aufweist (die Werte addieren sich zu 100 Gew.%):
| | **Gew.%** |
|---|---|
| **Tonerdezementklinker** | 30 bis 65 |
| **Portlandzementklinker** | 0 bis 20 |
| **Leichtzuschlagkörner** | 15 bis 40 |
| **CSH-Zuschlagkörner** | 5 bis 20 |
| **Mineralische Fasern** | 1 bis 5 |
| **Organische Naturfasern** | 0 bis 3 |
| **Inerte und/oder reaktive Betonzusatzstoff(e** | 0 bis 20 |
| **Betonzusatzmittel** | < 3 |
| **weitere Bestandteile, u.a. Erstarrungsregler** | < 5 |

12. Verfahren nach Anspruch 10 oder 11,
**dadurch gekennzeichnet, dass**
der Deckschichtfrischmörtel zur Herstellung der beiden Deckschichten (3a; 3b) bezogen auf die Gesamttrockenmasse folgende trockene Bestandteile aufweist (die Werte addieren sich zu 100 Gew.%):
| | **Gew.%** |
|---|---|
| **Tonerdezementklinker** | 55 bis 65 |
| **Portlandzementklinker** | 12 bis 18 |
| **Blähglas** | 12 bis 18 |
| **CSH-Zuschlagkörner** | 6 bis 10 |
| **Glasfasern** | 1,5 bis 3 |
| **Organische Naturfasern** | 0,5 bis 2 |
| **Puzzolanische Zusatzstoffe** | 0 bis 10 |
| **Betonzusatzmittel** | < 2 |
| **weitere Bestandteile, u.a. Erstarrungsregler** | < 5 |
und der Kernschichtfrischmörtel bezogen auf die Gesamttrockenmasse folgende trockene Bestandteile aufweist (die Werte addieren sich zu 100 Gew.%):
| | **Gew.%** |
|---|---|
| **Tonerdezementklinker** | 40 bis 50 |
| **Portlandzementklinker** | 6 bis 15 |
| **Blähglas** | 20 bis 30 |
| **Geblähter Vermiculit** | 5 bis 10 |
| **CSH-Zuschlagkörner** | 5 bis 8 |
| **Glasfasern** | 0,8 bis 1,5 |
| **Steinwollefasern** | 1,5 bis 2,0 |
| **Organische Naturfasern** | 0,5 bis 2,0 |
| **puzzolanischen Zusatzstoff** | 5 bis 15 |
| **Betonzusatzmittel** | < 3 |
| **weitere Bestandteile, u.a. Erstarrungsregler** | < 5 |

13. Verfahren nach Anspruch 10,
**dadurch gekennzeichnet, dass**
der Deckschichtfrischmörtel der beiden Deckschichten (3a; 3b) bezogen auf die Gesamttrockenmasse folgende trockene Bestandteile aufweist (die Werte addieren sich zu 100 Gew.%):
| | **Gew.%** |
|---|---|
| **Tonerdezementklinker** | 60 bis 70 |
| **Portlandzementklinker** | 12 bis 18 |
| **Geblähter Perlit** | 3 bis 7 |
| **CSH-Zuschlagkörner** | 10 bis 15 |
| **Glasfasern** | 1,5 bis 3 |
| **Puzzolanische Zusatzstoffe** | 0 bis 10 |
| **Betonzusatzmittel** | < 2 |
| **weitere Bestandteile, u.a. Erstarrungsregler** | < 5 |
und der Kernschichtfrischmörtel bezogen auf die Gesamttrockenmasse folgende trockene Bestandteile aufweist (die Werte addieren sich zu 100 Gew.%):
| | **Gew.%** |
|---|---|
| **Tonerdezementklinker** | 55 bis 65 |
| **Portlandzementklinker** | 0 bis 5 |
| **Geblähter Perlit** | 8 bis 15 |
| **CSH-Zuschlagkörner** | 10 bis 20 |
| **Glasfasern** | 1,5 bis 3 |
| **puzzolanischen Zusatzstoff** | 8 bis 15 |
| **Betonzusatzmittel** | < 3 |
| **weitere Bestandteile, u.a. Erstarrungsregler** | < 5 |

14. Verfahren nach einem der Ansprüche 10 bis 13,
**dadurch gekennzeichnet, dass**
der Deckschichtfrischmörtel der beiden Deckschichten (3a; 3b) einen höheren Zementanteil (Gew.%) als der Kernschichtfrischmörtel aufweist.

15. Verfahren nach einem der Ansprüche 10 bis 14,
**dadurch gekennzeichnet, dass**
der Deckschichtfrischmörtel der beiden Deckschichten (3a; 3b) bezogen auf die Gesamttrockenmasse 5 bis 20 Gew.%, bevorzugt 6 bis 10 Gew.% CSH-Zuschlagkörner (12) aufweist und/oder der Kernschichtfrischmörtel bezogen auf die Gesamttrockenmasse 5 bis 20 Gew.%, bevorzugt 10 bis 15 Gew.% CSH-Zuschlagkörner (7) aufweist.

## Claims

1. A fire protection panel (1) for preventative, structural fire protection, in particular for installation in tunnels or in ventilation and/or smoke extraction channels, comprising a cement-bound core layer (2) and two cement-bound cover layers (3a; b) that cover the core layer (2),
wherein the core layer (2) has the following features:
a) the core layer (2) has a hardened cement paste matrix (4) composed of a set, hydraulic binder containing calcium aluminate cement clinker,
b) in the hardened cement paste matrix (4), lightweight mineral aggregate particles (5) composed of high-melting-point material with a melting point of ≥ 700°C, preferably ≥ 1100°C, mineral fibres (6) and CSH aggregate particles (7) composed of hydrothermally hardened, tobermorite-containing CSH material are embedded,
and wherein the two cover layers (3a; 3b) each have the following features:
c) the two cover layers (3a; b) each have a hardened cement paste matrix (9) composed of a set, hydraulic binder containing calcium aluminate cement clinker and preferably Portland cement clinker,
d) in the hardened cement paste matrix (9), lightweight mineral aggregate particles (10) composed of high-melting-point material with a melting point of ≥ 700°C, preferably ≥ 1100°C, mineral fibres (11) and CSH aggregate particles (12) composed of hydrothermally hardened, tobermorite-containing CSH material are embedded,
e) the two cover layers (3a; 3b) have a higher dry bulk density po according to DIN EN ISO 12570 than the core layer (2).

2. The fire protection panel (1) according to claim 1,
**characterised in that**
the CSH aggregate particles (7; 12) of the core layer (2) and/or of the two cover layers (3a; 3b) are integrally waterproofed.

3. The fire protection panel (1) according to claim 1 or 2,
**characterised in that**
the CSH aggregate particles (7; 12) of the core layer (2) and/or of the two cover layers (3a; 3b) consist of recycled CSH material, preferably autoclaved aerated concrete material.

4. The fire protection panel (1) according to one of the preceding claims, **characterised in that**
the CSH aggregate particles (7;12) of the core layer (2) and/or of the two cover layers (3a; 3b) consist of crushed CSH material, in particular crushed autoclaved aerated concrete material, and/or sawdust and/or grinding dust from the dry secondary processing of CSH material, in particular of autoclaved aerated concrete material.

5. The fire protection panel (1) according to one of the preceding claims, **characterised in that**
the lightweight aggregate particles (5; 10) of the core layer (2) and/or of the two cover layers (3a; 3b) have a particle density of < 2.0 kg/dm³, preferably < 1.0 kg/dm³, according to DIN EN 1097-6.

6. The fire protection panel (1) according to one of the preceding claims,
**characterised in that**
the lightweight aggregate particles (5; 10) of the core layer (2) and/or of the two cover layers (3a; 3b) consist of expanded perlite or expanded vermiculite or foam glass or mixtures thereof.

7. The fire protection panel (1) according to one of the preceding claims,
**characterised in that**
the core layer (2) comprises individual organic natural fibres (8), in particular cellulose fibres, which are embedded in the hardened cement paste matrix (4).

8. The fire protection panel (1) according to one of the preceding claims,
**characterised in that**
the mineral fibres (6; 11) of the core layer (2) and/or of the cover layers (3a; 3b) are glass fibres and/or mineral wool fibres.

9. The fire protection panel (1) according to one of the preceding claims,
**characterised in that**
the hydraulic binder of the core layer (2) and/or of the cover layers (3a; 3b) contains at least one, preferably reactive, addition, in particular fly ash, and/or the fire protection panel (1) has a dry bulk density po according to DIN EN 12570 of 500 to 800 kg/m³, preferably 600 to 750 kg/m³, and/or the cover layers (3a; 3b) have a higher content (wt.%) of hardened cement paste than the core layer (2).

10. A method for producing a fire protection panel (1) according to one of the preceding claims, having the following method steps:
a) producing a core layer fresh mortar for producing the core layer (2) and preparing a fresh core layer therefrom,
b) producing a cover layer fresh mortar for producing the two cover layers (3a; 3b) and preparing two fresh cover layers therefrom,
c) joining together the two fresh cover layers and the fresh core layer,
d) leaving the core layer and the two cover layers to set.

11. The method according to claim 10,
**characterised in that**
the cover layer fresh mortar for producing the two cover layers (3a; 3b) has the following dry components, based on the total dry matter (the values add up to 100 wt.%):
| | **Wt.%** |
|---|---|
| **Calcium aluminate cement clinker** | 40 to 70 |
| **Portland cement clinker** | 0 to 20 |
| **Lightweight aggregate particles** | 5 to 20 |
| **CSH aggregate particles** | 5 to 20 |
| **Mineral fibres** | 1 to 5 |
| **Organic natural fibres** | 0 to 3 |
| **Inert and/or reactive concrete addition(s)** | 0 to 20 |
| **Concrete admixture(s)** | < 2 |
| **Other components, including setting regulator(s)** | < 5 |
and the core layer fresh mortar has the following dry components, based on the total dry matter (the values add up to 100 wt.%):
| | **Wt.%** |
|---|---|
| **Calcium aluminate cement clinker** | 30 to 65 |
| **Portland cement clinker** | 0 to 20 |
| **Lightweight aggregate particles** | 15 to 40 |
| **CSH aggregate particles** | 5 to 20 |
| **Mineral fibres** | 1 to 5 |
| **Organic natural fibres** | 0 to 3 |
| **Inert and/or reactive concrete addition(s)** | 0 to 20 |
| **Concrete admixture(s)** | < 3 |
| **Other components, including setting regulator(s)** | < 5 |

12. The method according to claim 10 or 11,
**characterised in that**
the cover layer fresh mortar for producing the two cover layers (3a; 3b) has the following dry components, based on the total dry matter (the values add up to 100 wt.%):
| | **Wt.%** |
|---|---|
| **Calcium aluminate cement clinker** | 55 to 65 |
| **Portland cement clinker** | 12 to 18 |
| **Foam glass** | 12 to 18 |
| **CSH aggregate particles** | 6 to 10 |
| **Glass fibres** | 1.5 to 3 |
| **Organic natural fibres** | 0.5 to 2 |
| **Pozzolanic additions** | 0 to 10 |
| **Concrete admixture(s)** | < 2 |
| **Other components, including setting regulator(s)** | < 5 |
and the core layer fresh mortar has the following dry components, based on the total dry matter (the values add up to 100 wt.%):
| | **Wt.%** |
|---|---|
| **Calcium aluminate cement clinker** | 40 to 50 |
| **Portland cement clinker** | 6 to 15 |
| **Foam glass** | 20 to 30 |
| **Expanded vermiculite** | 5 to 10 |
| **CSH aggregate particles** | 5 to 8 |
| **Glass fibres** | 0.8 to 1.5 |
| **Mineral wool fibres** | 1.5 to 2.0 |
| **Organic natural fibres** | 0.5 to 2.0 |
| **Pozzolanic addition** | 5 to 15 |
| **Concrete admixture(s)** | < 3 |
| **Other components, including setting regulator(s)** | < 5 |

13. The method according to claim 10,
**characterised in that**
the cover layer fresh mortar of the two cover layers (3a; 3b) has the following dry components, based on the total dry matter (the values add up to 100 wt.%):
| | **Wt.%** |
|---|---|
| **Calcium aluminate cement clinker** | 60 to 70 |
| **Portland cement clinker** | 12 to 18 |
| **Expanded perlite** | 3 to 7 |
| **CSH aggregate particles** | 10 to 15 |
| **Glass fibres** | 1.5 to 3 |
| **Pozzolanic additions** | 0 to 10 |
| **Concrete admixture(s)** | < 2 |
| **Other components, including setting regulator(s)** | < 5 |
and the core layer fresh mortar has the following dry components, based on the total dry matter (the values add up to 100 wt.%):
| | **Wt.%** |
|---|---|
| **Calcium aluminate cement clinker** | 55 to 65 |
| **Portland cement clinker** | 0 to 5 |
| **Expanded perlite** | 8 to 15 |
| **CSH aggregate particles** | 10 to 20 |
| **Glass fibres** | 1.5 to 3 |
| **Pozzolanic addition** | 8 to 15 |
| **Concrete admixture(s)** | < 3 |
| **Other components, including setting regulator(s)** | < 5 |

14. The method according to one of claims 10 to 13,
**characterised in that**
the cover layer fresh mortar of the two cover layers (3a; 3b) has a higher cement content (wt.%) than the core layer fresh mortar.

15. The method according to one of claims 10 to 14,
**characterised in that**
the cover layer fresh mortar of the two cover layers (3a; 3b) has 5 to 20 wt.%, preferably 6 to 10 wt.%, CSH aggregate particles (12), based on the total dry matter, and/or the core layer fresh mortar has 5 to 20 wt.%, preferably 10 to 15 wt.%, CSH aggregate particles (7), based on the total dry matter.

## Revendications

1. Plaque coupe-feu (1) pour la protection préventive contre l'incendie, structurelle, en particulier pour l'installation dans un tunnel ou dans des canaux d'aération et/ou de désenfumage, présentant une couche centrale liée au ciment (2) ainsi que deux couches de revêtement recouvrant la couche centrale (2), liées au ciment (3a ; b),
dans laquelle la couche centrale (2) présente des caractéristiques suivantes :
a) la couche centrale (2) présente une matrice de bloc de ciment (4) constituée d'un liant contenant un clinker de ciment alumineux, hydraulique,
b) dans la matrice de bloc de ciment (4) sont incorporées des particules d'addition légères (5) minérales constituées de matériau à haute température de fusion présentant un point de fusion ≥ 700 °C, de préférence ≥ 1100 °C, de fibres minérales (6) ainsi que de particules d'addition CSH (7) constituées d'un matériau CSH durci par hydrothermie, contenant de la tobermorite,
et dans laquelle les deux couches de revêtement (3a ; 3b) présentent respectivement des caractéristiques suivantes :
c) les deux couches de revêtement (3a ; b) présentent respectivement une matrice de bloc de ciment (9) constituée d'un clinker de ciment alumineux, hydraulique durci et de préférence d'un liant contenant un clinker de ciment Portland,
d) dans la matrice de bloc de ciment (9) se trouvent des particules d'addition légères minérales (10) constituées d'un matériau à température de fusion élevée présentant un point de fusion ≥ 700 °C, de préférence ≥ 1100 °C, de fibres minérales (11) ainsi que de particules d'addition CSH (12) constituées d'un matériau CSH durci par hydrothermie, contenant de la tobermorite,
e) les deux couches de revêtement (3a ; 3b) présentent une densité apparente sèche po selon la norme DIN EN ISO 12570 supérieure à celle de la couche centrale (2).

2. Plaque coupe-feu (1) selon la revendication 1,
**caractérisée en ce que**
les particules d'addition CSH (7 ; 12) de la couche centrale (2) et/ou des deux couches de revêtement (3a ; 3b) sont rendues hydrophobes dans la masse.

3. Plaque coupe-feu (1) selon la revendication 1 ou 2,
**caractérisée en ce que**
les particules d'addition CSH (7 ; 12) de la couche centrale (2) et/ou des deux couches de revêtement (3a ; 3b) consistent en un matériau CSH recyclé, de préférence un matériau de béton cellulaire.

4. Plaque coupe-feu (1) selon l'une quelconque des revendications précédentes,
**caractérisée en ce que**
les particules d'addition CSH (7 ; 12) de la couche centrale (2) et/ou des deux couches de revêtement (3a ; 3b) consistent en matériau CSH concassé, en particulier en matériau de béton cellulaire concassé, et/ou en sciure et/ou en résidus de ponçage du post-traitement à sec du matériau CSH, en particulier de matériau de béton cellulaire.

5. Plaque coupe-feu (1) selon l'une quelconque des revendications précédentes,
**caractérisée en ce que**
les particules d'addition légères (5 ; 10) de la couche centrale (2) et/ou des deux couches de revêtement (3a ; 3b) présentent une densité apparente de particules < 2,0 kg/dm³, de préférence < 1,0 kg/dm³ selon la norme DIN EN 1097-6.

6. Plaque coupe-feu (1) selon l'une quelconque des revendications précédentes,
**caractérisée en ce que**
les particules d'addition légères (5 ; 10) de la couche centrale (2) et/ou des deux couches de revêtement (3a ; 3b) consistent en de la perlite expansée ou en de la vermiculite expansée ou en du verre expansé ou en des mélanges de ceux-ci.

7. Plaque coupe-feu (1) selon l'une quelconque des revendications précédentes,
**caractérisée en ce que**
la couche de particules (2) présente des fibres naturelles organiques individuelles (8), en particulier des fibres de cellulose qui sont incorporées dans la matrice de bloc de ciment (4).

8. Plaque coupe-feu (1) selon l'une quelconque des revendications précédentes,
**caractérisée en ce que**
les fibres minérales (6 ; 11) de la couche centrale (2) et/ou des couches de revêtement (3a ; 3b) sont des fibres de verre et/ou des fibres de laine de roche.

9. Plaque coupe-feu (1) selon l'une quelconque des revendications précédentes,
**caractérisée en ce que**
le liant hydraulique de la couche centrale (2) et/ou des couches de revêtement (3a ; 3b) contient au moins un additif, de préférence réactif, en particulier des cendres volantes et/ou la plaque coupe-feu (1) présente une densité apparente sèche po selon la norme DIN EN ISO 12570 de 500 à 800 kg/m³, de préférence de 600 à 750 kg/m³ et/ou les couches de revêtement (3a ; 3b) présentent une proportion supérieure (en % en poids) de bloc de ciment par rapport à la couche centrale (2).

10. Procédé de production d'une plaque coupe-feu (1) selon l'une quelconque des revendications précédentes, comportant les étapes du procédé suivantes :
a) production d'un mortier frais de couche centrale pour la production de la couche centrale (2) et génération d'une couche centrale fraîche à partir de celui-ci,
b) production d'un mortier frais de couche de revêtement pour la production des deux couches de revêtement (3a ; 3b) et génération de deux couches de revêtement fraîches à partir de celui-ci,
c) assemblage des deux couches de revêtement fraîches et de la couche centrale fraîche,
d) liaison de la couche centrale et des deux couches de revêtement.

11. Procédé selon la revendication 10,
**caractérisé en ce que**
le mortier frais de couche de revêtement présente pour la production des deux couches de revêtement (3a ; 3b), par rapport à la masse sèche totale, les composants secs suivants (les valeurs s'ajoutent pour donner 100 % en poids) :
| | **% en poids** |
|---|---|
| **Clinker de ciment alumineux** | 40 à 70 |
| **Clinker de ciment Portland** | 0 à 20 |
| **Particules d'addition légères** | 5 à 20 |
| **Particules d'addition CSH** | 5 à 20 |
| **Fibres minérales** | 1 à 5 |
| **Fibres naturelles organiques** | 0 à 3 |
| **Additif(s) du béton inerte(s) ou réactif(s)** | 0 à 20 |
| **Adjuvants du béton** | < 2 |
| **Autres composants, entre autres, régulateurs de prise** | < 5 |
et le mortier frais de couche centrale présente, par rapport à la masse sèche totale, les composants secs suivants (les valeurs s'ajoutent pour donner 100 % en poids) :
| | **% en poids** |
|---|---|
| **Clinker de ciment alumineux** | 30 à 65 |
| **Clinker de ciment Portland** | 0 à 20 |
| **Particules d'addition légères** | 15 à 40 |
| **Particules d'addition CSH** | 5 à 20 |
| **Fibres minérales** | 1 à 5 |
| **Fibres naturelles organiques** | 0 à 3 |
| **Additif(s) du béton inerte(s) ou réactif(s)** | 0 à 20 |
| **Adjuvants du béton** | < 3 |
| **Autres composants, entre autres, régulateurs de prise** | < 5 |

12. Procédé selon la revendication 10 ou 11,
**caractérisé en ce que**
le mortier frais de couche de revêtement présente pour la production des deux couches de revêtement (3a ; 3b), par rapport à la masse sèche totale, les composants secs suivants (les valeurs s'ajoutent pour donner 100 % en poids) :
| | **% en poids** |
|---|---|
| **Clinker de ciment alumineux** | 55 à 65 |
| **Clinker de ciment Portland** | 12 à 18 |
| **Verre expansé** | 12 à 18 |
| **Particules d'addition CSH** | 6 à 10 |
| **Fibres de verre** | 1,5 à 3 |
| **Fibres naturelles organiques** | 0,5 à 2 |
| **Additif(s) de type pouzzolane** | 0 à 10 |
| **Adjuvants du béton** | < 2 |
| **Autres composants, entre autres, régulateurs de prise** | < 5 |
et le mortier frais de couche centrale présente, par rapport à la masse sèche totale, les composants secs suivants (les valeurs s'ajoutent pour donner 100 % en poids) :
| | **% en poids** |
|---|---|
| **Clinker de ciment alumineux** | 40 à 50 |
| **Clinker de ciment Portland** | 6 à 15 |
| **Verre expansé** | 20 à 30 |
| **Vermiculite expansée** | 5 à 10 |
| **Particules d'addition CSH** | 5 à 8 |
| **Fibres de verre** | 0,8 à 1,5 |
| **Fibres de laine de roche** | 1,5 à 2,0 |
| **Fibres naturelles organiques** | 0,5 à 2,0 |
| **Additif(s) de type pouzzolane** | 5 à 15 |
| **Adjuvants du béton** | < 3 |
| **Autres composants, entre autres, régulateurs de prise** | < 5 |

13. Procédé selon la revendication 10,
**caractérisé en ce que**
le mortier frais de couche de revêtement des deux couches de revêtement (3a ; 3b) présente par rapport à la masse sèche totale, les composants secs suivants (les valeurs s'ajoutent pour donner 100 % en poids) :
| | **% en poids** |
|---|---|
| **Clinker de ciment almineux** | 60 à 70 |
| **Clinker de ciment Porland** | 12 à 18 |
| **Perlite expansée** | 3 à 7 |
| **Particules d'additionCSH** | 10 à 15 |
| **Fibres de verre** | 1,5 à 3 |
| **Additif(s) de type pouzzolane** | 0 à 10 |
| **Adjuvants du béton** | < 2 |
| **Autres composants, entre autres, régulateurs de prise** | < 5 |
et le mortier frais de couche centrale présente, par rapport à la masse sèche totale, les composants secs suivants (les valeurs s'ajoutent pour donner 100 % en poids) :
| | **% en poids** |
|---|---|
| **Clinker de ciment alumineux** | 55 à 65 |
| **Clinker de ciment Portland** | 0 à 5 |
| **Perlite expansée** | 8 à 15 |
| **Particules d'addition CSH** | 10 à 20 |
| **Fibres de verre** | 1,5 à 3 |
| **Additif(s) de type pouzzolane** | 8 à 15 |
| **Adjuvants du béton** | < 3 |
| **Autres composants, entre autres, régulateurs de prise** | < 5 |

14. Procédé selon l'une quelconque des revendications 10 à 13,
**caractérisé en ce que**
le mortier frais de couche de revêtement des deux couches de revêtement (3a ; 3b) présente une teneur en ciment supérieure (% en poids) à celle du mortier frais de la couche centrale.

15. Procédé selon l'une quelconque des revendications 10 à 14,
**caractérisé en ce que**
le mortier frais de couche de revêtement des deux couches de revêtement (3a ; 3b) présente, par rapport à la masse sèche totale, 5 à 20 % en poids, de préférence 6 à 10 % en poids de particules d'addition CSH (12) et/ou le mortier frais de couche centrale présente par rapport à la masse sèche totale, 5 à 20 % en poids, de préférence 10 à 15 % en poids de particules d'addition CSH (7).
